# EUROPÄISCHE PATENTSCHRIFT

(11) **EP 2 963 318 B1**
(45) Veröffentlichungstag und Bekanntmachung des Hinweises auf die Patenterteilung: **02.08.2017**
(21) Anmeldenummer: 15169529.3
(22) Anmeldetag: 28.05.2015
(51) Int. Cl.: F16J 15/3288, F16J 15/322, F16J 15/3268, F01D 11/00

(54) **BÜRSTENDICHTUNG**
BRUSH SEAL
JOINT BALAI

(30) Priorität: 04.07.2014 DE 102014213044
(43) Veröffentlichungstag der Anmeldung: 06.01.2016
(73) Patentinhaber: MTU Aero Engines AG, 80995 München (DE)
(72) Erfinder: Klän, Stephan, 10707 Berlin (DE); Weber, Julian, 80797 München (DE); Stiehler, Frank, 04924 Bad Liebenwerda (DE); Cernay, Christoph, 83052 Bruckmühl (DE); Heß, Thomas, 81541 München (DE)

(56) Entgegenhaltungen:
- EP-A1- 1 653 129
- EP-A2- 1 018 613
- EP-A2- 1 947 297
- US-A- 5 308 088
- US-A1- 2006 038 351
- US-A1- 2008 122 183

## Beschreibung

Die Erfindung betrifft eine Bürstendichtung für eine Gasturbine, insbesondere eines Flugtriebwerks, nach dem Oberbegriff des Anspruchs 1.

Bürstendichtungen werden insbesondere dazu verwendet, um Leckage zwischen einem stehenden Teil (im Folgenden auch Stator genannt) und einem rotierenden Teil (im Folgenden auch Rotor genannt) zu verhindern oder zumindest merklich zu reduzieren. Eine bekannte Bürstendichtung umfasst einen Drahtring, um den die Borsten gelegt werden. Zur Fixierung der Borsten auf dem Drahtring wird häufig ein c-förmiger Klemmring verwendet. Üblicherweise liegen die Borsten in einer Ebene, die senkrecht zur Drehachse des rotierenden Teils verläuft. Damit die Borsten im Betrieb nicht axial - bezogen auf die Drehachse des rotierenden Teils - zu der Seite hin, wo der niedrigere Druck herrscht, d.h. zu der druckabwärtigen Seite hin verschoben werden können, muss eine Fixierung vorgesehen werden. Dazu wird an der stromabwärtigen Seite der Borsten eine ausreichend stabile, ringförmige Stützplatte angeordnet. Die ringförmige Stützplatte muss in radialer Richtung zu dem rotierenden Teil hin kürzer ausgestaltet sein als die Borsten, so dass zwischen der unteren Kante der Stützplatte und dem rotierenden Teil ein Spalt vorhanden ist. Im Gegensatz dazu streifen die Borsten entlang der Oberfläche des Rotors.

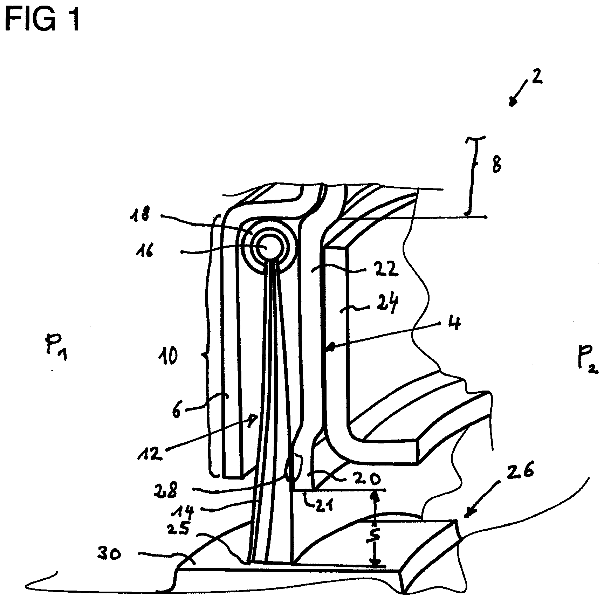

Eine solche aus dem Stand der Technik bekannte Bürstendichtung ist beispielsweise in der Figur 1 abgebildet. In Figur 1 wird ein Meridianschnitt bezogen auf die hier nicht dargestellte Drehachse des Rotors durch eine Bürstendichtung 2 gezeigt. Dabei fließt in der Darstellung der Figur 1 eine Strömung von links nach rechts, so dass der Druck p₁ in Figur 1 links von der Bürstendichtung größer ist als der Druck p₂ rechts von der Bürstendichtung. Die Bürstendichtung 2 umfasst einen sich in dieser Schnittansicht im Wesentlichen radial erstreckenden Stützring 4 und eine sich im Wesentlichen radial erstreckende ringförmige Halteplatte 6, die im radial äußeren Bereich 8 miteinander verbunden sind. Im radial inneren Bereich 10 zwischen dem Stützring 4 und der Halteplatte 6 ist eine Aufnahme 12 für die Borsten 14 vorgesehen.

Diese Borsten 14 sind um einen Drahtring 16 gewickelt und werden durch einen c-förmige Klemmring 18 auf dem Drahtring 16 gehalten. Die Elemente 14 bis 18 sind derart in der Aufnahme 12 angeordnet, dass der Klemmring 18 vom Stützring 4 und der Halteplatte eingeklemmt wird. Der Stützring 4 weist ein radial nach innen gerichtetes ringförmiges steifes Stützelement 20 mit einer radial nach innen gerichteten Mantelfläche 21 und eine ringförmige Befestigungsplatte 22 auf, die radial außen von dem Stützelement 20 und stromabwärts dazu versetzt angeordnet ist. Die Befestigungsplatte 22 ist hier an ihrer stromabwärtigen Seite mit einem L-förmigen Statorabchnitt 24 verbunden. Die Borsten 14 ragen soweit radial nach innen über die Mantelfläche 21, dass die radial nach innen gerichteten Ende 25 der Borsten 14 auf der Oberfläche 30 eines Rotors 26 streifen. Ein mittlerer Bereich 28 der Borsten 14 liegt dabei an dem Stützelement 20 an. Zwischen der Mantelfläche 21 des Stützelements 20 und der Oberfläche 30 des Rotors 26 ist ein Spalt S vorhanden.

Bei einem Schaden der Gasturine, kann der Rotor radial wesentlich stärker ausscheren als im normalen Betrieb zu erwarten ist. Dies kann insbesondere dann vorkommen, wenn eine Laufschaufel vom Rotor abbricht, zum Beispiel, wenn es durch Vogelschlag zu einem Verlust einer Fan-Schaufel bei einem Flugtriebwerk kommt. Dann ist der Rotor nicht mehr ausgewuchtet, so dass der Rotor eine exzentrische Bewegung um seine ursprüngliche Rotationsachse ausführt. Ist dann der Spalt S zwischen dem Stützelement und dem Rotor sehr klein ausgelegt worden, kann dies zu einer Beschädigung des Rotors führen, da das Stützelement in den Rotor schneidet. Dies kann im schlimmsten Fall zum Bruch des Rotors führen. Um die Beschädigungen auf dem Rotor zu reduzieren, kann die Mantelfläche der Stützplatte entsprechend beschichtet werden. Allerdings sind hierbei nur sehr geringe Schichtdicken möglich. Wird dagegen der Spalt zwischen dem Stützelement und dem Rotor zu groß ausgelegt, erhöht sich die Bündelleckage, so dass die Dichtwirkung und damit auch der Wirkungsgrad der Gasturbine verringert wird.

Aus der Druckschrift EP 1947 297 A2 ist eine Dichtung für eine Gasturbine bekannt, die ein Dichtungsgehäuse mit einer darin befestigten Stützplatte aufweist. Die Stützplatte stützt die Bürste der Dichtung axial. Das Dichtungsgehäuse ist radial federnd gelagert.

Die Druckschrift US 5,308,088 A zeigt eine Bürstendichtung, bei der die Bürsten mit Hilfe einer Stützstruktur axial gestützt werden. Die Stützstruktur weist gegenüber der radialen Reichtung geneigte Rippen auf.

Des Weiteren offenbart die Druckschrift EP 1653 129 A1 eine Bürstendichtung mit einem Bürstenring. Die Borsten der Bürste weisen einen bestimmten Winkel gegenüber der radialen Richtung auf.

Somit liegt der vorliegenden Erfindung die Aufgabe zu Grunde, eine Bürstendichtung vorzustellen, die den Rotor in einem Schadensfall der Gasturbine nicht beschädigt und die gleichzeitig im normalen Betrieb eine möglichst gute Dichtwirkung bietet.

Die Aufgabe wird durch die Merkmale des Anspruchs 1 gelöst.

Die Erfindung betrifft eine Bürstendichtung für eine Gasturbine, insbesondere Flugtriebwerk, mit mindestens einem Stützring, der eine Stützplatte und eine, insbesondere ringförmige, Stützstruktur aufweist, die gegenüber der Stützplatte stromab angeordnet ist, und mit mehreren Borsten, die gegenüber dem Stützring stromauf angeordnet sind und deren Enden radial nach innen über die Stützplatte ragen. Dabei ist die Stützstruktur derart ausgelegt, dass beim Auftreten einer radial nach außen weisenden Anstreifkraft auf die radial nach innen gerichtete Mantelfläche der Stützstruktur diese, vorzugsweise federelastisch, nachgibt, wohingegen die Stützstruktur beim Auftreten einer axialen Betriebskraft auf mindestens einer der Seitenflächen der Stützstruktur dieser axialen Betriebskraft standhält.

Die Stützstruktur ist dabei derart ausgelegt, dass sie bei einer radial vom Rotor auf sie wirkenden Abstreifkraft, vorzugsweise federelastisch, nachgibt, ohne eine nennenswerte Wegenkraft auf den Rotor auszuüben, zum Beispiel eine Gegenkraft von weniger als 100N, vorzugsweise von weniger als 50N, weiter bevorzugt von weniger als ION. Im Gegensatz hierzu ist die Stützstruktur erfindungsgemäße beim Auftreten von einer axialen Betriebskraft kaum bzw. nicht nennenswert nachgiebig. Mit anderen Worten weist die Stützstruktur eine Steifigkeit in axialer Richtung auf, die um ein Vielfaches größer als ihre Steifigkeit in radialer Richtung ist (mit axialer Richtung ist hierbei stets die Richtung der Drehachse der Gasturbine gemeint, wohingegen die radiale Richtung eine Richtung orthogonal zur axialen Richtung ist).

Insbesondere kann die Steifigkeit der Stützstruktur in axialer Richtung um wenigstens das 10-fache, vorzugsweise wenigstens das 100-flache, weiter bevorzugst wenigstens das 1000-fache größer sein als in radialer Richtung.

Dies ist insbesondere vorteilhaft, da die erfindungsgemäße Bürstendichtung somit ein anstreiftolerantes Design aufrweist. Die bisherigen Lösungen verrrreiden jegliches Anstreifen. Damit kann der zwischen dem rotierenden Teil und der Stützplatte vorhandene Spalt so klein wie möglich ausgelegt werden. Der Minimalspalt kann auch durch Einlaufen beim erstmaligen Betrieb des Triebwerks entstehen. Damit wird sichergestellt, dass die Bündelleckage am geringsten ist.

Die Stützplatte, welche insbesondere zur Abstützung der Borsten in axialer Richtung dient, ist gegenüber der ihr in axialer Richtung benachbarten Stützstruktur wesentlich dünner (d.h. mit einer geringeren Erstreckung in axialer Richtung) als die Stützstruktur ausgebildet, nämlich weniger als halb so dick, weiter bevorzugt weniger als 1/5 so dick, noch weiter bevorzugt weniger als 1/10 so dick wie die Stützstruktur. Dies wird ermöglicht, da die Stützplatte, wenn die ihr stromauf benachbarten Borsten eine axiale Kraft auf diese ausüben, sich an der ihr stromab benachbarten Stützstruktur abstützen kann, die in axialer Richtung entsprechend steif ausgebildet ist. Hierdurch ist es möglich, dass die Stützplatte derart ausgebildet werden kann, dass sie durch Abscheren, Biegen, Abreiben und/oder insbesondere durch Schmelzen nachgibt, sobald eine radial nach außen gerichtete Anstreifkraft von dem Rotor der Gasturbine auf sie wirkt, ohne dass dabei auf den Rotor der Gasturbine eine nennenswerte Gegenkraft wirkt und insbesondere ohne dass der Rotor der Gasturbine dabei beschädigt, insbesondere eingekerbt, wird. Dieser Fall tritt - wie eingangs beschrieben - bei bekannten Bürstendichtungen für Gasturbinen nämlich ansonsten leicht ein, wenn im Notfall, zum Beispiel bei einer großen Unwucht durch Verlust einer Fan-Schaufel bei Vogelschlag, ein rotierendes Bauteil übermäßig radial ausschlag und die Stützplatte berührt. Ferner kann die Stützplatte geschlossen oder auch geschlitzt sein. Außerdem kann die Stützplatte segmentiert sein.

Es ist vorteilhaft die Stützstruktur in Strömungsrichtung betrachtet hinter der Stützplatte anzuordnen, da dies die Möglichkeit bietet die Stützplatte in axialer Belastungsrichtung (also in Strömungsrichtung) mittels der Stützstruktur zu verstärken. So kann die Stützplatte z.B. in axialer Richtung kleiner dimensioniert werden und kann damit radial weicher ausgelegt werden.

Ferner kann dadurch, dass der Spalt zwischen Rotor der Gasturbine und einem radial nach innen gerichteten Ende der Stützplatte so klein ausgelegt werden kann, die Stützplatte die Dichtungsfunktion der Bürstendichtung deutlich verbessern, wohingegen die Abstützfunktion in axialer Richtung von der Stützstruktur übernommen werden kann. Die Stützplatte kann - wie zuvor beschrieben - in axialer Richtung sehr schmal ausgelegt sein und damit viel einfacher beim Auftreten einer nach außen gerichteten radial Kraft abreibend und/oder schmelzend nachgeben. Dadurch ist die Kerbwirkung der Stützplatte auf den Rotor kaum mehr vorhanden. Insbesondere können die Stützplatte und die Stützstruktur aus verschiedenen Materialien aufgebaut sein. Im Betrieb kann sich die Stützplatte gegen die Stützstruktur anlegen.

Die Stützstruktur kann aus einem nachgiebigen Material bestehen. Dabei kann die Stützstruktur offenporig sein und/oder aus einem Sintermaterial hergestellt sein. Denkbar sind auch engmaschige Gitterstrukturen und/oder Honigwaben.

In einer weiteren vorteilhaften Ausgestaltung der Erfindung ist zwischen der Stützstruktur und der Stützplatte ein Spalt vorhanden. Außerdem kann die Stützstruktur im Wesentlichen parallel zur Stützplatte verlaufen. Oder aber die Stützstruktur ist an der Stützplatte angeordnet. Hierbei können die Stützplatte und die Stützstruktur (formschlüssig, materialschlüssig oder kraftschlüssig) angeformt sein.

Dies ist insbesondere vorteilhaft, da sich mittels eines Spalts die axiale Steifigkeit des gesamten Stützrings einstellen lässt.

Die Stützstruktur weist mehrere auf einer im Wesentlichen radial verlaufenden Ebene liegenden Rippen auf, die sich gegenüber der radialen Richtung zumindest abschnittsweise mit einem Winkel (β) geneigt sind, wobei der Winkel (β) vorzugsweise zwischen 10° bis 40° beträgt. Dabei können die Rippen in axialer Richtung eine größere Ausdehnung aufweisen als in Umfangsrichtung.

In einer weiteren vorteilhaften Ausgestaltung der Erfindung weisen die Borsten zur radialen Richtung einen Winkel von 40° bis 60° auf. Sobald die Rippen zur radialen Richtung geneigt sind, können deren radial nach innen angeordneten Enden einfacher radial nach außen ausweichen. Mit dem Grad der Rippenneigung kann die radiale Steifigkeit eingestellt werden. Vorzugsweise sind die Rippen der Stützstruktur und die Borsten gegenüber der radialen Richtung in unterschiedliche Richtungen geneigt.

In einer weiteren vorteilhaften Ausgestaltung der Erfindung ist mindestens eine der Rippen federartig ausgestaltet und/oder mindestens eine der Rippen verläuft gerade.

Die federartige Ausgestaltung der Rippe bietet die Möglichkeit, dass die Rippe in radialer Richtung elastisch verformbar ist. Dabei können die Rippen zickzackförmig oder c-förmig ausgestaltet sein. Auch eine geradverlaufende Rippe mit einer Neigung zur radialen Richtung weist eine gewisse Elastizität auf. Die Endstellen der Rippen und/oder die Stellen, an denen die Rippe eine Richtungsänderung erfährt, können dabei wie Festkörpergelenke wirken, die Federeigenschaft der Rippe fördern.

In einer weiteren vorteilhaften Ausgestaltung der Erfindung ist an mindestens einem radial nach innen gerichteten Ende mindestens einer Rippe mindestens ein Innendeckband angeformt. Dabei können mehrere radial nach innen weisende Ende der entsprechenden Rippen an einem ringförmigen Innendeckband angeformt sein.

Alternativ hierzu kann auch jede Rippe der Stützstruktur ein eigenes Innendeckband aufweisen. Dabei kann das radiale innere Ende der Rippe zwischen den in Umfangsrichtung angeordneten Enden des Innendeckbands angeordnet sein. Oder aber das radiale innere Ende der Rippe ist an einem in Umfangsrichtung angeordneten Enden des Innendeckbands angeordnet. Es können sich auch beispielsweise zwei, drei bis 40 Rippen ein Innendeckband teilen, d.h. bspw. dass fünf radial nach innen gerichtete Enden der entsprechenden fünf Rippen an einem einzigen Innendeckband angeformt sind. Alle Innendeckbänder sind in Umfangsrichtung hintereinander angeordnet und bilden einen segmentierten Ring. Die Innendeckbänder können aber auch einen geschlossen Innenring bilden.

In einer weiteren vorteilhaften Ausgestaltung der Erfindung weist der Stützring eine radial außen angeordnete und im Wesentlichen ringförmige Befestigungsplatte auf, an der das radiale äußere Ende der Stützplatte und/oder an der das radial äußere Ende der Stützstruktur angeordnet sind. Die Befestigungsplatte kann im Bedarfsfall segmentiert sein. Typischerweise kann eine Bürstendichtung eine ringförmige Halteplatte aufweisen, die stromauf zu den Borsten angeordnet ist. Dabei klemmen der Stützring und die Halteplatte einen c-förmigen Drahtring mit den radial nach innen ragenden Borsten ein.

Weitere Vorteilhafte Ausgestaltung der Erfindung sind in den Unteransprüchen wiedergegeben.

Im Weiteren werden anhand der schematischen Zeichnung bevorzugte Ausführungsbeispiele der Erfindung näher beschrieben. Dabei zeigen:
- - Figur 1:: einen Meridianschnitt durch eine Bürstendichtung nach dem Stand der Technik;
- - Figuren 2A - 2C: einen erfindungsgemäßen Stützring nach einer ersten Ausführungsform;
- - Figuren 3A - 3C: einen erfindungsgemäßen Stützring nach einer zweiten Ausführungsform;
- - Figuren 4A - 4B: einen erfindungsgemäßen Stützring nach einer dritten Ausführungsform;
- - Figur 5:: einen erfindungsgemäß Stützring nach einer vierten Ausführungsform;
- - Figur 6:: einen erfindungsgemäß Stützring nach einer fünften Ausführungsform; und
- - Figur 7:: einen erfindungsgemäß Stützring nach einer sechsten Ausführungsform.

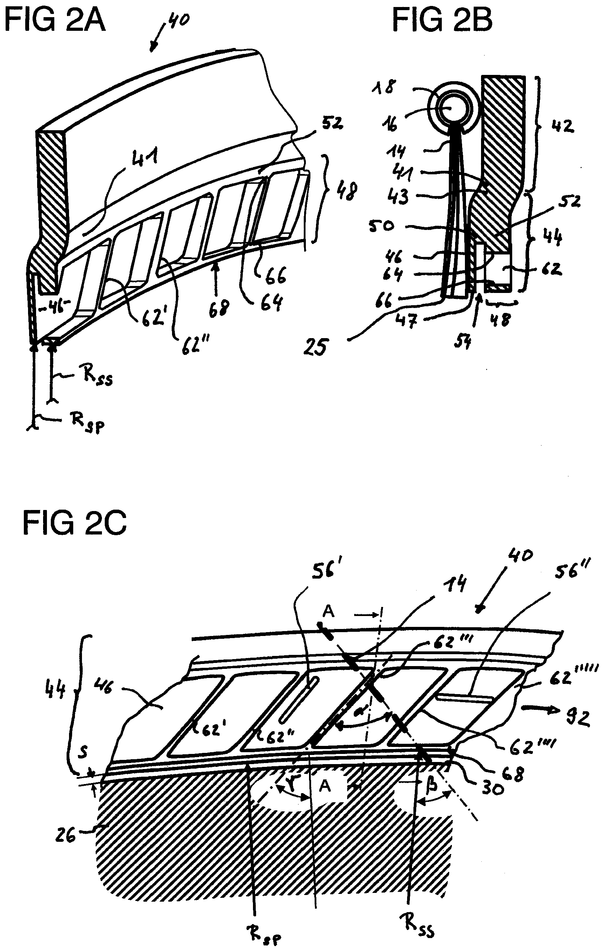

Die Figuren 2A bis 7 zeigen erfindungsgemäße Stützringe unterschiedlicher Ausführungsformen. Die verschiedenen Ausführungsformen unterscheiden sich insbesondere durch die unterschiedliche Ausgestaltung der Stützstrukturen, auf die nun im Folgenden näher eingegangen wird.

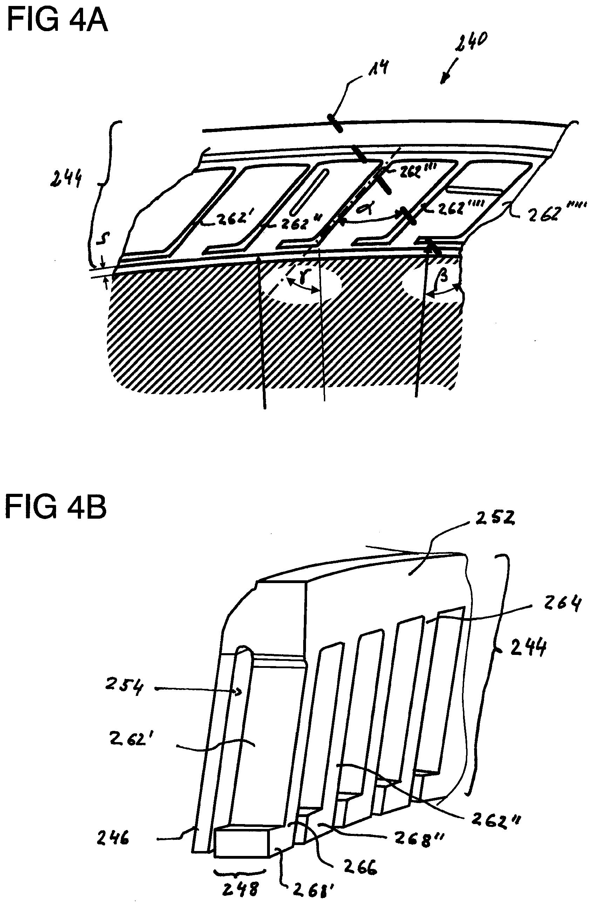

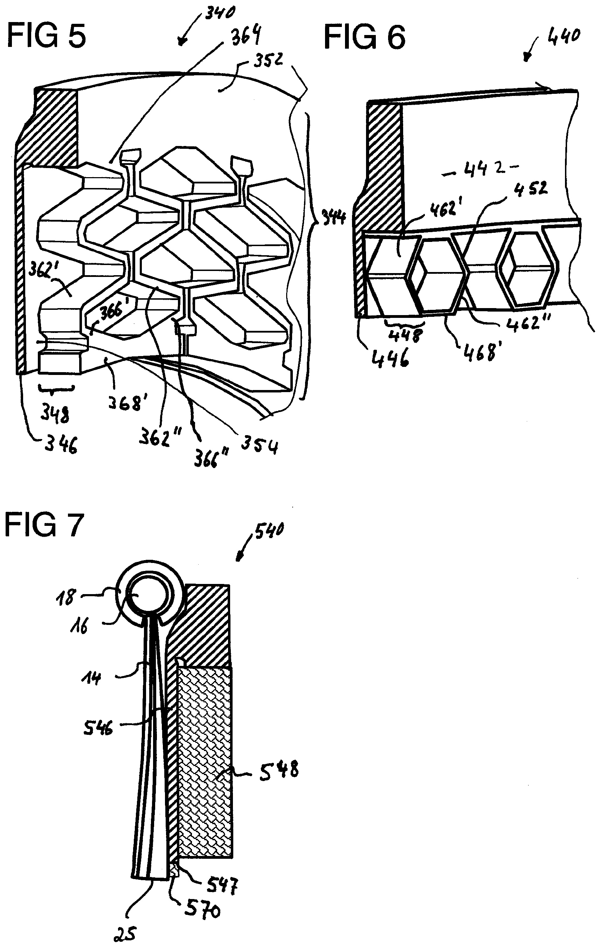

Die Figur 2A zeigt eine perspektivische Ansicht einer ersten Ausführungsform eines erfindungsgemäßen Stützrings 40. Die Figur 2C zeigt eine axiale Ansicht entlang einer nicht dargestellten Triebwerksachse der ersten Ausführungsform des erfindungsgemäßen Stützrings 40 aus Figur 2A. In der Figur 2B ist ein Schnitt entlang der Linie A-A in Figur 2C abgebildet. Wie in Figur 2B gezeigt ist, umfasst der Stützring 40 radial von außen nach innen eine ringförmige Befestigungsplatte 42, die wahlweise segmentiert sein kann, und ein ringförmiges Stützelement 44, das ebenfalls wahlweise segmentiert sein kann. Das radial innere Ende 41 der Befestigungsplatte 42 ist an dem radial äußeren Ende 43 des Stützelementes 44 angeformt bzw. integral mit diesem ausgebildet. Das Stützelement 44 weist stromauf eine Stützplatte 46 und stromab eine Stützstruktur 48 auf, wobei deren radial äußeren Enden 50, 52 miteinander verbunden sind. Die Stützstruktur 48 kann in radialer Verlängerung zur Befestigungsplatte 42 angeordnet sein (siehe dazu Figuren 4B bis 7). Oder aber die Stützstruktur 48 kann axial versetzt zur Befestigungsplatte 42 angeordnet sein. Vorzugsweise ist in dem zuletzt genannten Fall die Stützstruktur 48 gegenüber der Befestigungsplatte 42 zumindest teilweise stromauf angeordnet. Der Innenradius R_{SP} der Stützplatte 46 kann kleiner sein als der Innenradius Rₛₛ der Stützstruktur 48. Die Stützstruktur 48 kann in axialer Richtung direkt an der Stützplatte 46 angeordnet sein, wie beispielsweise in den Figuren 6 und 7 abgebildet, oder aber die Stützstruktur 48 ist von der Stützplatte 46 beabstandet, so dass ein Ringspalt 54 vorhanden ist, wie in den Figuren 2A und 2B abgebildet. Damit kann sich die Stützstruktur 48 unabhängig von der Stützplatte 46 bewegen.

Die Stützstruktur 48 weist mehrere radial nach innen verlaufende Rippen 62' etc. auf, wobei jedes radial nach außen weisende Ende 64 der Rippen 62' etc. am radial äußeren Ende 52 der Stützstruktur 48 angeformt ist. Jedes radial nach innen ragende Ende 66 der Rippen 62' etc. ist an einem als Innenring 68 gestalteten Innendeckband angeformt. Dabei kann der Innenring 68 ein geschlossener Teilring sein. Insbesondere kann der Teilring 180° des Umfangs umspannen. Andere Einteilungen sind vorstellbar. In der Stützplatte 46 können Sollbruchstellen oder Schlitze 56' und 56" vorgesehen sein (siehe Figur 2C).

In der Figur 2C ist zur besseren Erklärung nur noch eine einzige Borste 14 abgebildet, die schräg unter einem Winkel α (hier ca. 80°) zur dritten Rippe 62'" verläuft, wobei die Borste 14 dann einen Winkel β (hier ca. 43°) zur radialen Richtung Rₛₛ einnimmt. Die Rippen 62' etc. verlaufen nicht in radialer Richtung, sondern sind um den Winkel γ geneigt. Die Borste 14 ist auf der Rückseite der Stützplatte 46 angeordnet, d.h. die Borsten sind gegenüber der Stützplatte 46 stromaufwärts dazu angeordnet. Wie bereits erwähnt, kann die Stützplatte 46 bspw. zwischen der zweiten Rippe 62" und dritten Rippe 62'" einen Schlitz 56' (hier parallel zu den Rippen 62' etc. verlaufend) aufweisen. Zwischen der vierten Rippe 62"" und der fünften Rippe 62"'" ist in der Stützplatte 46 gemäß dem in Figur 2C dargestellten Ausführungsbeispiel ein weiterer Schlitz 56" (hier in Umfangsrichtung verlaufend) vorgesehen.

Unterhalb des Innenrings 68 in einem Abstand S ist der Rotor 26 (beispielsweise eine Welle) angeordnet. Der Abstand S gibt den Spalt zwischen einer radial nach innen weisenden Mantelfläche 47 der Stützplatte 46 und der Oberfläche 30 der Welle 26 wieder, der durch die Bürstendichtung abgedichtet werden soll. Dabei liegt das radiale innere Ende 25 der Borste 14 auf der Oberfläche 30 der Welle 26 auf. Dabei kann sich die Welle 26 in Richtung 92 drehen.

Diese Konstruktion bietet damit die Möglichkeit, dass der Innenring 68 bei einer radialen Bewegung der Welle 26 (bis zu einer bestimmten Grenze versteht sich) radial nach außen ausweichen kann. Dies wird insbesondere dadurch ermöglicht, dass die Stege 62', etc. mit einem Winkel zur radialen Richtung verlaufen, dass sie zudem relativ dünn (in Umfangsrichtung der Gasturbine betrachtet) ausgebildet sind, und dass die radial inneren und äußeren Enden der Stege 62', etc. wie Festkörpergelenke wirken. Die Stützplatte 46 ist im Vergleich zur der Stützstruktur 48 wesentlich dünner ausgebildet, und kann somit bei einem Anstreifen des Rotors der Gasturbine leicht nachgeben, insbesondere aufschmelzen oder "wegkrümeln", ohne dabei eine Beschädigung beim Rotor herbeizuführen. Im Notfall, d.h. wenn eine große radiale Kraft von dem Rotor der Gasturbine auf die erfindungsgemäße Bürstendichtung ausgeübt wird, z.B. weil durch Vogelschlag eine Fan-Schaufel abgebrochen ist und der Rotor somit stark unwuchtig ist, begünstigen die in Figur 2C dargestellten Schlitze 56', 56" ein im Wesentlichen komplettes Wegbrechen der Stützplatte 46. Die erfindungsgemäße Bürstendichtung hat somit den Vorteil, dass die Welle 26 vor Beschädigungen geschützt wird und der Spalt S zwischen der radial nach innen weisenden Mantelfläche 47 der Stützplatte 46 und der Wellenoberfläche 30 für den normalen Betrieb relativ klein ausgelegt werden kann.

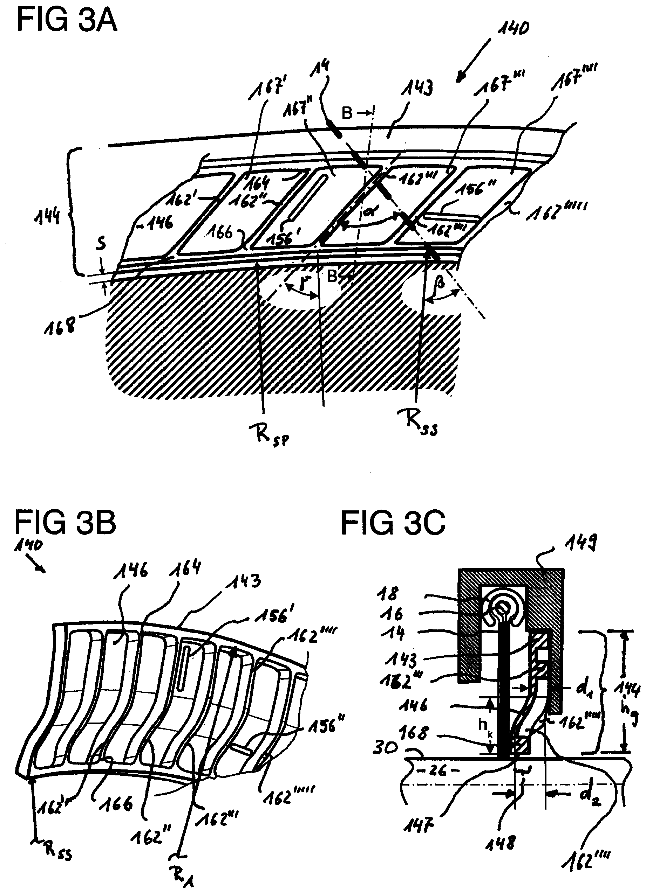

In den Figuren 3A bis 3C ist eine zweite Aufführungsform eines erfindungsgemäßen Stützrings 140 abgebildet. Die Figur 3B zeigt eine perspektivische Ansicht der zweiten Ausführungsform des erfindungsgemäßen Stützrings 140. Die Figur 3A zeigt eine axiale Ansicht entlang einer nicht dargestellten Triebwerksachse der zweiten Ausführungsform des erfindungsgemäßen Stützrings 140 aus Figur 3B. In der Figur 3C wird ein radialer Schnitt entlang der Linie B-B in Figur 3A gezeigt.

Der Stützring 140 weist ein Stützelement 144 auf. Dieser in den Figuren 3A bis 3C abgebildeter Stützring 140 umfasst jedoch keine Befestigungsplatte. Als Alternative dazu kann der Stützring 140 eine Befestigungsplatte wie in der ersten Ausführungsform aufweisen. Dabei weist das Stützelement 144 eine Stützstruktur 148 und eine Stützplatte 146 auf. Im Gegensatz zur in den Figuren 2A bis 2C dargestellten ersten Ausführungsform sind die Stützstruktur 148 und die Stützplatte 146 stoffschlüssig miteinander verbunden. Als Alternative dazu kann die Stützstruktur 148, wie in den Figuren 2A bis 2C, von der Stützplatte 146 beabstandet sein.

In der perspektivischen Ansicht gemäß Figur 3B ist lediglich ein Teilausschnitt des erfindungsgemäßen Stützrings 140 wiedergegeben. In dieser Darstellung stellt die Vorderseite die stromabwärtige Seite des Stützrings 140 dar. Entsprechend stellt die Rückseite die stromaufwärtige Seite des Stütztrings 140 dar. Der Stützring 140 umfasst einen Außenring 143 mit einem Außenradius R_{A}, der mit dem radial äußeren Ende 43 vom Stützelement 44 aus den Figuren 2A und 2B vergleichbar ist, und einen Innenring 168 mit einem Innenradius R_{SS}, der mit dem Innenring 68 aus den Figuren 2A und 2B vergleichbar ist. Zwischen dem Außenring 143 und dem Innenring 168 verlaufen in einem Winkel γ zur radialen Richtung bezogen auf die nicht dargestellte Drehachse des Rotors mehrere Rippen 162', 162", 162"', 162"" und 162'"". Die radial äußere Enden 164 der Rippen 162' etc. sind am Außenring 143 angeformt. Die radial inneren Enden 166 der Rippen 162' etc. sind am Innenring 168 angeformt. Auf der Rückseite der beiden Ringe 143 und 168 und der Rippen 162' etc. verläuft eine Stützplatte 146. An der Vorderseite werden durch die Ringe 143 und 168 und die Rippen 162' etc. einzelne Fächer 167' etc. gebildet. Diese Fächer 167' etc. können in der Stützplatte 146 Schlitze 156' aufweisen.

In den Figuren 3A und 3B von links nach rechts betrachtet ist das erste Fach 167' zwischen der ersten 162' und der zweiten 162" Rippe angeordnet und ist an der Rückseite (stromaufwärtigen Seite) in axialer Richtung völlig geschlossen, da die Stützplatte 146 direkt an den Rückseiten der Rippen 162' etc. angeformt ist. Das zweite Fach 167" ist zwischen der zweiten Rippe 162" und der dritten Rippe 162'" angeordnet und ist an der Rückseite (stromaufwärtigen Seite) in axialer Richtung nicht völlig geschlossen, da in der Stützplatte 146 ein erster Schlitz 156' eingelassen ist, der parallel zu den Rippen 162' etc. verläuft. Das dritte Fach 167'" ist zwischen der dritten Rippe 162'" und der vierten Rippe 162"" angeordnet und ist axial geschlossen. Das vierte Fach 167"' ist zwischen der vierten Rippe 162"" und der fünften Rippe 162"" angeordnet und ist nicht völlig geschlossen, da in der Stützplatte 146 ein im Wesentlichen in Umfangsrichtung verlaufender zweiter Schlitz 156" eingelassen ist. Es ist anzumerken, dass die Schlitze 156' und 156" optional vorhanden sein können, wobei die Orientierung und die Form der Schlitze auch variieren kann. Vorzugsweise verlaufen die Schlitze jedoch nicht parallel zu den Borsten 14. Alle Fächer 167' etc. sind radial außen durch den Außenring 143 und radial innen durch den Innenring 168 begrenzt.

In der Figur 3C ist ein radialer Schnitt entlang der Linie B-B in Figur 3A zu sehen.
Die Borsten 14 sind genauso wie in den Figuren 1 und 2B um einen Drahtring 16 gelegt. Zur Fixierung der Borsten 14 auf dem Drahtring 16 wird ein c-förmiger Klemmring 18 verwendet. Unterhalb des Klemmrings 18 ist in der Figur 3C auf der rechten Seite der Borsten 14 das Stützelement 144 angeordnet. Dabei ist der Druck links von der Bürstendichtung größer als der Druck rechts von der Bürstendichtung . Im Unterschied zur Figur 1, werden das Stützelement 144 und der Klemmring 18 mittels eines im Wesentlichen U-förmigen Presselements 149 zusammengehalten. Dabei liegt die in Figur 3C rechte Fläche des Stützelementes 144 am Presselement 149 an. Das Presselement 149 übernimmt unter anderem die Funktionen der Befestigungsplatte 22 eines Stützrings und der Halteplatte 6 in der Figur 1. Damit ist in allen hier vorgestellten Ausführungsbeispielen die entsprechenden Befestigungsplatten optional.

Im Folgenden werden nun auf die einzelnen Elemente des Stützrings 140 eingegangen, die in diesem Schnitt entlang der Linie B-B sichtbar sind. Dabei werden zuerst die radial äußersten, dann die radial mittleren und zum Schluss die radial inneren Elemente aufgeführt. Dabei verläuft in Figur 3C der Schnitt entlang der Linie B-B über die gesamte radiale Höhe der Stützplatte 146 von oben nach unten. Radial außen ist als erstes vom Stützring 140 der Schnitt durch den Außenring 143 abgebildet. Radial weiter innen folgt der Schnitt durch die dritte Rippe 162'". Die Ebene B-B schneidet radial ganz innen den Innenring 168 des Stützringes 140. Zwischen dem Schnitt der dritten Rippe 162'" und dem Schnitt des Innenrings 168 ist eine Seitenfläche der vierten Rippe 162"" erkennbar, die eine erste axiale Dicke d₁ aufweist. Die vierte Rippe 162"" weist dabei über die gesamte radiale Höhe des Stützrings 140 eine konstante axiale Dicke d₁ auf und folgt der Kontur der Stützplatte 146. Im Gegensatz dazu können einige oder alle Rippen aber auch unterschiedliche axiale Dicken aufweisen, die von der radialen Höhe abhängt.

So ist in diesem zweiten Ausführungsbeispiel die fünfte Rippe 162""' im Hintergrund in der Figur 3C noch erkennbar, da diese fünfte Rippe 162"" eine zweite axiale Dicke d₂ aufweist, die größer ist als die erste axiale Dicke d₁ der vierten Rippe 162"", so dass die stromabwärtige Kante der fünften Rippe 162"" im Vergleich zur stromabwärtigen Kante der vierten Rippe 162"" in Figur 3C weiter rechts abgebildet ist. Konkret ist die fünfte Rippe 162'"" unterhalb der Höhe hₖ entlang einer radialen Geraden nach etwas innen geführt, so dass von innen nach außen betrachtet ab einer Höhe von ca. ½ hₖ die fünfte Rippe 162"" eine zweite Dicke d₂ aufweist, die größer ist als die erste Dicke d₁. Dabei kann die Höhe hₖ zwischen 1/10 hg und ½ hg liegen, wobei die Höhe hg die gesamte radiale Höhe des Stützelementes 144 wiedergibt. Es ist anzumerken, dass die Rippen alle eine einheitliche Dicke aufweisen können.

Außerdem ist aus der Figur 3C erkennbar, dass der Außenring 143 axial weiter rechts angeordnet ist als der Innenring 168, so dass die Stützplatte 146 im radialen Schnitt eine S-Form aufweist. Damit ist der Außenring 143 hier gegenüber dem Innenring 168 stromabwärts angeordnet. Der Außenring 143 kann gegenüber dem Innenring 168 auch stromaufwärts angeordnet sein. Denkbar ist auch, dass die beiden Ringe 143 und 168 keinen axialen Versatz aufweisen.

In diesem zweiten Ausführungsbeispiel schließen das radiale äußere Ende der Stützplatte 146 bündig mit dem Außenring 143 und das radiale innere Ende 147 der Stützplatte 146 bündig mit dem Innenring 168 ab. Die Stützplatte 146 kann aber alternativ auch radial über mindestens einem der Ringe 143, 168 ragen.

In den Figuren 4A und 4B ist ein erfindungsgemäßer Stützring 240 mit einem Stützelement 244 nach einer dritten Ausführungsform abgebildet. Eine Befestigungsplatte kann vorhanden sein, ist aber in den Figuren 4A und 4B nicht abgebildet. Das Stützelement 244 umfasst die Stützstruktur 248 und die Stützplatte 246. Die Stützstruktur 248 weist mehrere in erster Näherung radial nach innen verlaufende Rippen 262' etc. auf, wobei jedes radial nach außen weisende Ende 264 der Rippen 262' etc. am radial äußeren Ende 252 der Stützstruktur 248 angeformt ist. In dieser dritten Ausführungsform weist jedes nach innen ragende Ende 266 der Rippe 262' etc. ein eigenes voneinander getrenntes Innendeckband 268' etc. auf. So ist die erste Rippe 262' einem ersten Innendeckband 268' zugeordnet, die zweite Rippe 262" einem zweiten Innendeckband 268", usw. Dabei kann jede einzelne Rippe 262' etc. in dem abgebildeten Ausführungsbeispiel mit dem entsprechenden Innendeckband 268' etc. radial nach innen bündig abschließen. So entstehen dann einzeln voneinander getrennte L-förmige Lamellen mit den einzelnen Rippen 262' etc. und den einzelnen Innendeckbänder 268' etc. Diese Lamellen stellen die Stützstruktur 248 dar. Zwischen der Stützstruktur 248 und der Stützplatte 246 kann ein Ringspalt 254 vorgesehen sein. Der Unterschied der Stützstruktur 48 der ersten Ausführungsform zur Stützstruktur 248 der dritten Ausführungsform liegt darin, dass der Innenring 68 entsprechend segmentiert ist, so dass dieser entsprechend in einzelne voneinander getrennte Innendeckbänder 268' übergeht.

Die Figur 5 zeigt eine schräge Teilansicht auf einen Stützring 340 nach einer vierten Ausführungsform. Diese vierte Ausführungsform unterscheidet sich lediglich von der dritten Ausführungsform in der Ausgestaltung der Stützstruktur. Dieser Stützring 340 umfasst ein Stützelement 344. Dabei weist das Stützelement 344 eine Stützstruktur 348 und eine Stützplatte 346 auf. Zwischen der Stützstruktur 348 und der Stützplatte 346 kann ein Ringspalt 354 vorgesehen sein. Die Stützstruktur 348 umfasst mehrere radial nach innen ragende und zickzackförmige Rippen 362' etc. und mehrere voneinander getrennte Innendeckbänder 368' etc., wobei die inneren Enden 366' und 366" von jeweils zwei Rippen 362' und 362" sich ein Innendeckband 368' teilen und an diesem angeformt sind. Die radial äußeren Ende 364 aller Rippen sind am Außenring 352 angeformt. Dadurch entsteht eine Struktur, die einerseits in axialer Richtung steif, aber in radialer Richtung federelastisch ist.

Die Figur 6 zeigt eine schräge Teilansicht auf einen Stützring 440 nach einer fünften Ausführungsform. Im Unterschied zur vierten Ausführungsform bilden zwei radial nach innen ragende und v-förmige Rippen 462' und 462" mit einem in Umfangsrichtung erstreckenden Innendeckband 468' eine sechseckförmige Honigwabenstruktur. Die Stützstruktur 448 weist mehrere solcher Honigwaben, die in Umfangsrichtung hintereinander angeordnet sind und hier an einem einzigen Außendeckband 452 angeformt sind, das radial unterhalb der Befestigungsplatte 442 angeordnet ist. Zwischen der Stützplatte 446 und der Stützstruktur 448 kann ein Ringspalt vorgesehen sein. Hier in diesem konkreten Ausführungsbeispiel liegen die Honigwaben jedoch direkt an der Stützplatte 446 an, ohne jedoch mit dieser verbunden zu sein. Dabei kann die Stützstruktur 448 aus einem anderen Material bestehen als die Stützplatte 446.

Die Figur 7 zeigt einen Schnitt durch einen Stützring 540 nach einer sechsten Ausführungsform. Die Schnittebene gemäß Figur 7 umfasst die hier nicht dargestellte Drehachse des Rotors der Gasturbine. Auf der radial nach innen weisenden Mantelfläche 547 der Stützplatte 546 ist eine radiale Verlängerung 570 aus einem abriebfähigen Material aufgebracht. Es ist auch vorstellbar, dass die Stützplatte 546 aus einem abriebfähigen Material besteht. Dabei kann vor dem ersten Betrieb der Bürstendichtung die Verlängerung 570 den Spalt zwischen Rotor und Stator der Gasturbine fast komplett abdecken, d.h. dass die Verlängerung 570 annähernd genauso weit radial nach innen ragt wie die Borstenenden 25, die an dem nicht dargestellten Rotor der Gasturbine anstreifen. Beim ersten Betrieb eines Triebwerks wird nur der notwendige Bereich der Verlängerung 570 abgetragen, so dass der Spalt zwischen der radial nach innen weisenden Mantelfläche der Verlängerung 570 und der Oberfläche des Rotors relativ klein ist. Zusätzlich kann eine Stützstruktur 548 ebenfalls aus einem abriebfähigen Material vorgesehen sein, die stromab nach der Stützplatte 546 angeordnet ist.

### Bezugszeichenliste

- 2: Bürstendichtung
- 4: Stützring
- 6: Halteplatte
- 8: äußerer Bereich von 4 und 6
- 10: innerer Bereich von 4 und 6
- 12: Aufnahme
- 14: Borsten
- 16: Drahtring
- 18: Klemmring
- 20: Stützelement
- 21: Mantelfläche von 20
- 22: Befestigungsplatte
- 24: L-förmiger Stator
- 25: inneres Ende von 14
- 26: Rotor
- 28: mittlerer Bereich von 14
- 30: Oberfläche von 26
- 40: Stützring (1. Ausführungsform)
- 41: inneres Ende von 42
- 42: Befestigungsplatte
- 43: äußeres Ende von 44
- 44: Stützelement
- 46: Stützplatte
- 47: Mantelfläche
- 48: Stützstruktur
- 50: äußeres Ende von 46
- 52: äußeres Ende von 48
- 54: Ringspalt zwischen 46 und 48
- 56: Schlitze
- 62: Rippen
- 64: äußeres Ende der Rippen
- 66: inneres Ende der Rippen
- 68: Innenring

- 140: Stützring (2. Ausführungsform)
- 143: Außenring
- 144: Stützelement
- 146: Stützplatte
- 147: Mantelfläche
- 148: Stützstruktur
- 149: Presselement
- 156': Schlitz
- 162': Rippe
- 164: äußeres Ende der Rippen
- 166: inneres Ende der Rippen
- 167': Fach
- 168: Innenring

- 240: Stützring (3. Ausführungsform)
- 244: Stützelement
- 246: Stützplatte
- 248: Stützstruktur
- 252: äußeres Ende von 248
- 254: Ringspalt zwischen 46 und 48
- 256' etc: Schlitze
- 262' etc: Rippen
- 264: äußeres Ende der Rippen
- 266: inneres Ende der Rippen
- 268: Innendeckband

- 340: Stützring (4. Ausführungsform)
- 344: Stützelement
- 346: Stützplatte
- 348: Stützstruktur
- 352: Außenring
- 354: Ringspalt zwischen 46 und 48
- 362' etc.: Rippen
- 364: äußeres Ende der Rippen
- 366: inneres Ende der Rippen
- 368': Innendeckband

- 440: Stützring (5. Ausführungsform)
- 442: Befestigungsplatte
- 446: Stützplatte
- 448: Stützstruktur
- 452: Außendeckband
- 462' etc.: Rippen
- 468' etc.: Innendeckband

- 540: Stützring (6. Ausführungsform)
- 546: Stützplatte
- 547: Mantelfläche
- 548: Stützstruktur
- 570: Verlängerung

- hg: Gesamthöhe von Stützelement
- d₁,₂: Dicken der Rippen
- R_{A}, R_{SP;} R_{SS}: Radien
- S: Abstand zwischen Rotor und Stützplatte

## Patentansprüche

1. Bürstendichtung für eine Gasturbine, insbesondere Flugtriebwerk, mit
- mindestens einem Stützring (40; 140; 240; 340; 440; 540), der eine Stützplatte (46; 146; 246; 346; 446; 546) und eine, insbesondere ringförmige, Stützstruktur (48; 148; 248; 348; 448; 548) aufweist, die gegenüber der Stützplatte (46; 146; 246; 346; 446; 546) stromab angeordnet ist,
- Borsten (14), die gegenüber dem Stützring (40; 140; 240; 340; 440; 540) stromauf angeordnet sind und deren Enden (25) radial nach innen über die Stützplatte (46; 146; 246; 346; 446; 546) ragen, wobei
- die Stützstruktur (48; 148; 248; 348; 448; 548) derart ausgelegt ist, dass beim Auftreten einer radial nach außen weisenden Anstreifkraft auf die radial nach innen gerichtete Mantelfläche der Stützstruktur (48; 148; 248; 348; 448; 548) diese, vorzugsweise federelastisch, nachgibt, wohingegen die Stützstruktur (48; 148; 248; 348; 448; 548) beim Auftreten einer axialen Betriebskraft auf mindestens einer der Seitenflächen der Stützstruktur (48; 148; 248; 348; 448; 548) dieser axialen Betriebskraft standhält,
- die Stützstruktur (48; 148; 248; 348; 448; 548) mehrere auf einer im Wesentlichen radialen verlaufenden Ebene liegende Rippen (62, 162, 262, 362, 462) aufweist, die gegenüber der radialen Richtung zumindest abschnittsweise mit einem Winkel (γ) geneigt sind, wobei der Winkel (γ) vorzugsweise zwischen 10° bis 40° beträgt, und
- die Stützplatte (46; 146; 246; 346; 446; 546) in axialer Richtung weniger als halb so dick ist wie die Stützstruktur (48; 148; 248; 348; 448; 548).

2. Bürstendichtung nach Anspruch 1, **dadurch gekennzeichnet, dass** zwischen der Stützstruktur (48) und der Stützplatte (46) ein Spalt (54) vorhanden ist und dass die Stützstruktur (48) im Wesentlichen parallel zur Stützplatte (46) verläuft.

3. Bürstendichtung nach Anspruch 1, **dadurch gekennzeichnet, dass** die Stützstruktur (48) unmittelbar an der Stützplatte (46) angrenzt.

4. Bürstendichtung nach mindestens einem der vorherigen Ansprüche, **dadurch gekennzeichnet, dass** die Borsten (14) zur radialen Richtung einen Winkel (β) von 40° bis 60° aufweisen.

5. Bürstendichtung nach mindestens einem der vorherigen Ansprüche, **dadurch gekennzeichnet, dass** mindestens eine der Rippen (362'; 362") federartig ausgestaltet ist und/oder mindestens eine der Rippen (62'; 262') gerade verläuft.

6. Bürstendichtung nach mindestens einem der vorherigen Ansprüche, **dadurch gekennzeichnet, dass** an mindestens einem radial nach innen gerichteten Ende (266) mindestens einer Rippe (262') ein, insbesondere segmentiertes, Innendeckband (268') angeformt ist.

7. Bürstendichtung nach mindestens einem der vorherigen Ansprüche, **dadurch gekennzeichnet, dass** der Stützring (40) eine radial außen angeordnete und im Wesentlichen ringförmige Befestigungsplatte (42) aufweist, an der das äußere Ende (50) der Stützplatte (46) und/oder an der das äußere Ende (52) der Stützstruktur (48) angeordnet sind.

8. Bürstendichtung nach Anspruch 7, **dadurch gekennzeichnet, dass** die Stützplatte (46) und/oder die Stützstruktur (48) zur Befestigungsplatte (42) axial versetzt angeordnet sind.

9. Verfahren zur Herstellung einer Bürstendichtung nach einem der obigen Ansprüche 1 bis 8, wobei der Stützrings, die Bürstendichtung, die Stützplatte (46) und/oder die Stützstruktur (48) generativ hergestellt wird bzw. werden.

## Claims

1. A brush seal for a gas turbine, in particular, an aircraft engine, comprising:
• at least one support ring (40; 140; 240; 340; 440; 540) which has a support plate (46; 146; 246; 346; 446; 546) and a support structure (48; 148; 248; 348; 448; 548) that is, in particular, annular in shape, and that is arranged downstream of the support plate (46; 146; 246; 346; 446; 546); and
• bristles (14) which are arranged upstream of the support ring (40; 140; 240; 340; 440; 540) and have ends (25) that protrude radially inward beyond the support plate (46; 146; 246; 346; 446; 546), wherein
• the support structure (48; 148; 248; 348; 448; 548) is designed so as to yield, preferably with a spring elastic property, when a scraping force acting radially outward occurs on the radially inwardly oriented lateral surface of the support structure (48; 148; 248; 348; 448; 548), whereas the support structure (48; 148; 248; 348; 448; 548) does not yield to an axial operating force when this axial operating force occurs on at least one of the side surfaces of the support structure (48; 148; 248; 348; 448; 548);
• the support structure (48; 148; 248; 348; 448; 548) has a plurality of ribs (62, 162, 262, 362, 462) that lie in a plane running substantially radially, and are inclined at least in some sections at an angle (γ) to the radial direction, where the angle (γ) is preferably between 10° and 40°; and
• the support plate (46; 146; 246; 346; 446; 546) is less than half as thick in the axial direction as the support structure (48; 148; 248; 348; 448; 548) is.

2. The brush seal according to claim 1, **characterized in that** there is a clearance (54) present between the support structure (48) and the support plate (46), and the support structure (48) runs substantival parallel to the support plate (46).

3. The brush seal according to claim 1, **characterized in that** the support structure (48) is directly adjacent to the support plate (46).

4. The brush seal according to at least one of the preceding claims, **characterized in that** the bristles (14) have an angle (β) of 40° to 60° to the radial direction.

5. The brush seal according to at least one of the preceding claims, **characterized in that** at least one of the ribs (362'; 362") is configured in the manner of a spring and/or at least one of the ribs (62'; 262') runs in a straight line.

6. The brush seal according to at least one of the preceding claims, **characterized in that** an inner cover band (268') that is, in particular, segmented, is integrally molded on a radially inwardly oriented end (266) of at least one of the ribs (262').

7. The brush seat according to at least one of the preceding claims, **characterized in that** the support ring (40) has a substantially annular mounting plate (42), which is arranged radially outwardly and on which the outer end (50) of the support plate (46) is arranged and/or on which the outer end (52) of the support structure (48) is arranged.

8. The brush seal according to claim 7, **characterized in that** the support plate (46) and/or the support structure (48) is/are arranged with an axial offset relative to the mounting plate (42).

9. A method for producing the brush seal according to any of the above claims 1 to 8, wherein the support ring, the brush seal, the support plate (46), and/or the support structure (48) is/are produced generatively.

## Revendications

1. Joint à balai pour une turbine à gaz, en particulier un groupe motopropulseur, comprenant :
- au moins une couronne d'appui (40; 140; 240; 340; 440; 540), qui présente une plaque d'appui (46; 146; 246; 346; 446; 546) et une structure d'appui en particulier annulaire (48; 148; 248; 348; 448; 548), qui est agencée en aval vis-à-vis de la plaque d'appui (46; 146; 246; 346; 446; 546),
- des soies (14), qui sont agencées en amont vis-à-vis de la couronne d'appui (40; 140; 240; 340; 440; 540) et dont les extrémités (25) se dressent radialement vers l'intérieur sur la plaque d'appui (46; 146; 246; 346; 446; 546), dans lequel :
- la structure d'appui (48; 148; 248; 348; 448; 548) est conçue de sorte que, lors de l'intervention d'une force d'application tournée radialement vers l'extérieur sur la surface enveloppante tournée vers l'intérieur de la structure d'appui (48; 148; 248; 348; 448; 548), celle-ci fléchisse de manière élastique, tandis que la structure d'appui (48; 148; 248; 348; 448; 548), lors de l'intervention d'une force opératoire axiale sur au moins l'une des surfaces latérales de la structure d'appui (48; 148; 248; 348; 448; 548), résiste à cette force opératoire,
- la structure d'appui (48; 148; 248; 348; 448; 548) présente plusieurs nervures (62, 162, 262, 362, 462) se trouvant sur un plan sensiblement radial, qui sont inclinées vis-à-vis de la direction radiale au moins par sections avec un angle (γ), dans lequel l'angle (γ) atteint de préférence une valeur entre 10° et 40° et
- la plaque d'appui (46; 146; 246; 346; 446; 546) est moins de moitié aussi épaisse dans la direction axiale que la structure d'appui (48; 148; 248; 348; 448; 548).

2. Joint à balai selon la revendication 1, **caractérisé en ce qu'**il y a entre la structure d'appui (48) et la plaque d'appui (46) un intervalle (54) et la structure d'appui (48) s'étend sensiblement parallèlement à la plaque d'appui (46).

3. Joint à balai selon la revendication 1, **caractérisé en ce que** la structure d'appui (48) est directement contiguë à la plaque d'appui (46).

4. Joint à balai selon au moins l'une quelconque des revendications précédentes, **caractérisé en ce que** les soies (14) présentent par rapport à la direction radiale un sangle (3) de 40° à 60°.

5. Joint à balai selon au moins l'une quelconque des revendications précédentes, **caractérisé en ce qu'**au moins une des nervures (362'; 362") est conçue de manière élastique et/ou au moins l'une des nervures (62'; 262") s'étend de manière rectiligne.

6. Joint à balai selon au moins l'une quelconque des revendications précédentes, **caractérisé en ce qu'**une bande de recouvrement interne segmentée en particulier segmentée (268') est formée sur au moins une extrémité (266) dirigée radialement vers l'intérieur d'au moins une nervure (262').

7. Joint à balai selon au moins l'une quelconque des revendications précédentes, **caractérisé en ce que** la couronne d'appui (40) présente une plaque de fixation sensiblement annulaire (42) agencée radialement vers l'extérieur, sur laquelle l'extrémité externe (50) de la plaque d'appui (46) et/ou sur laquelle l'extrémité externe (52) de la structure d'appui (48) est ou sont agencées.

8. Joint à balai selon la revendication 7, **caractérisé en ce que** la plaque d'appui (46) et/ou la structure d'appui (48) est ou sont agencées décalées axialement vis-à-vis de la plaque de fixation (42).

9. Procédé de fabrication selon l'une quelconque des revendications 1 à 8 précédentes, dans lequel la couronne d'appui, le joint à balai, la plaque d'appui (46) et/ou la structure d'appui (48) est ou sont fabriqués de manière générative.
